# EUROPÄISCHE PATENTSCHRIFT

(11) **EP 2 992 515 B1**
(45) Veröffentlichungstag und Bekanntmachung des Hinweises auf die Patenterteilung: **25.07.2018**
(21) Anmeldenummer: 14719512.7
(22) Anmeldetag: 17.04.2014
(51) Int. Cl.: G07F 17/32, H04B 10/114

(54) **UNTERHALTUNGSSPIELGERÄT UND ÜBERWACHUNGSSYSTEM**
AMUSEMENT MACHINE AND MONITORING SYSTEM
APPAREIL DE DIVERTISSEMENT ET SYSTÈME DE SURVEILLANCE

(30) Priorität: 02.05.2013 DE 102013104460
(43) Veröffentlichungstag der Anmeldung: 09.03.2016
(73) Patentinhaber: Novomatic AG, 2352 Gumpoldskirchen (AT)
(72) Erfinder: KORNDÖRFER, Jens, 55457 Horrweiler (DE)
(86) Internationale Anmeldenummer: PCT/EP2014/057864
(87) Internationale Veröffentlichungsnummer: WO 2014/177394

(56) Entgegenhaltungen:
- JP-A- 2012 085 943
- US-A1- 2003 190 958
- US-A1- 2010 248 814
- US-A1- 2011 128 384
- US-A1- 2014 357 354

## Beschreibung

Die Erfindung bezieht sich auf ein Unterhaltungsspielgerät mit einem Gehäuse zur Aufnahme einer mit einer Anzeigeeinrichtung zur Darstellung des Spielablaufs verbundenen rechnergesteuerten Spielablaufsteuerung und ein Überwachungssystem mit mindestens einem Unterhaltungsspielgerät mit einer rechnergesteuerten Spielablaufsteuerung.

Eine Infrarot-Leuchtdiode ist aus dem Stand der Technik bekannt und emittiert üblicherweise Licht im nahinfraroten Bereich mit einer Wellenlänge von 700 nm bis 1000 nm. Dieser Wellenlängenbereich des Lichtspektrums ist für das menschliche Auge nicht sichtbar, er lässt sich jedoch mit Strahlungsdetektoren aus pyroelektrischen Materialien oder Halbleitern, beispielsweise mit Fotodioden oder Fototransistoren, messen. Auch Digitalkameras sind neben sichtbarem Licht auch für infrarotes Licht empfindlich. Üblicherweise werden Infrarot-Leuchtdioden in Infrarotfernbedienungen, beispielsweise für Fernseh- oder Radiogeräte, in Lichtschranken oder Bewegungsmeldern verwendet.

Im Weiteren ist es bekannt, in Spielhallen Überwachungskameras zu installieren, um die aufgestellten Unterhaltungsspielgeräte bzw. die Spieler zu beobachten, insbesondere um Manipulationen an den Unterhaltungsspielgeräten zu vermeiden. Die Überwachungskameras sind an mindestens einen Bildschirm in einem Servicebereich angeschlossen, damit das Service-Personal von den Spielern in der Spielhalle unbeobachtet agieren kann. Darüber hinaus besteht die Möglichkeit, Unterhaltungsspielgeräte in ein Netzwerk der Spielstätte einzubinden, um Informationen abzurufen. Hierbei sind aber besondere Sicherheitsvorkehrungen erforderlich, damit das Netzwerk vor dem Zugriff eines Unbefugten gesichert ist.

In einer Spielhalle kann es erforderlich sein, dass das Service-Personal regelmäßig die Unterhaltungsspielgeräte inspiziert, um beispielsweise festzustellen, ob eine Kasse zu leeren oder eine Auszahlung aufzufüllen ist, insbesondere wenn die Unterhaltungsspielgeräte nicht über ein Computer-Netzwerk mit einer Service-Zentrale in Verbindung stehen.

Sowohl die Beobachtung der Unterhaltungsspielgeräte zur Vermeidung von Manipulationen als auch die regelmäßige Inspektion der Unterhaltungsspielgeräte ist relativ zeitaufwändig, wobei insbesondere die Begutachtung des Unterhaltungsspielgerätes von den Spielern als störend empfunden wird.

Die Schrift US 2003/0190958 A1 beschreibt ein Unterhaltungsspielgerät, das über eine optische, drahtlose Verbindung mit anderen Unterhaltungsspielgeräten und/oder einem Server Daten austauscht.

Die Schrift US 2011/0128384 A1 beschreibt ein System und Verfahren zum Empfangen und Auswerten von Infrarot-Daten, die erfasst werden mit einer Kamera zur Aufnahme von Bildern im Bereich des sichtbaren Lichts.

Die Schrift US 2010/0248814 A1 beschreibt ein Unterhaltungsspielgerät mit einem Sicherheits-Interfacemodul für die Überwachung von Türkontaktschaltern und anderen Einrichtungen des Unterhaltungsspielgeräts. Das Sicherheits-Interfacemodul hat eine eigene Stromversorgung und Kommunikationsverbindung zu einem Backend-System.

Im Rahmen der Erfindung ist unter einer Münze nicht nur ein entsprechendes Geldstück zu verstehen, vielmehr sind auch Jetons oder sonstige Wertmarken, Chips oder dergleichen gleichbedeutend. Dementsprechend ist auch die Münzkasse nicht allein zur Aufnahme von Geldstücken bestimmt, sondern kann ebenso mit Jetons, Chips oder sonstigen Wertmarken gefüllt werden, die beispielsweise in einer ungeordneten Schüttung vorliegen. Auch unter dem Begriff Geldschein sind nicht nur solche papierartigen Zahlungsmittel sondern auch Wertscheine/Gutscheine oder dergleichen zu subsumieren. Selbstverständlich kann das Unterhaltungsspielgerät nach der Erfindung neben geldwerten Gegenständen auch Geldkarten, Wertkarten, Guthabenkarten oder dergleichen akzeptieren, um einen Einsatz zu entrichten bzw. das Unterhaltungsspielgerät in einen bestimmungsgemäßen Betriebszustand zu versetzen und/oder Gewinne auszugeben. Es ist auch ein Aufbuchen eines Guthabens, beispielsweise drahtlos, insbesondere mittels so genannter "near field communication", möglich. Im Weiteren kann das Unterhaltungsspielgerät auch ein bekanntes Ticketsystem umfassen, bei dem eingegebene Tickets in einer Kassette gespeichert und auszugebende Tickets von einem Drucker gefertigt werden, wobei die ausgegebenen Tickets beispielsweise wieder zum Bezahlen an einem dem Ticketsystem zugeordneten Unterhaltungsspielgerät verwendet werden können.

Unter einem Unterhaltungsspielgerät ist im Sinne der Erfindung auch ein Wettterminal oder dergleichen Unterhaltungsgerät mit und ohne Gewinnmöglichkeit zu verstehen ohne den Rahmen der Erfindung zu verlassen.

Der Erfindung liegt die Aufgabe zugrunde, ein Unterhaltungsspielgerät der eingangs genannten Art zu schaffen, das mit einfachen technischen Mitteln ohne besonderen Installationsaufwand überwachbar ist.

Erfindungsgemäß wird die Aufgabe durch die Merkmale des Anspruchs 1 gelöst.

Die Unteransprüche stellen vorteilhafte Ausgestaltungen der Erfindung dar.

Ein Unterhaltungsspielgerät umfasst ein Gehäuse zur Aufnahme einer mit einer Anzeigeeinrichtung zur Darstellung des Spielablaufs verbundenen rechnergesteuerten Spielablaufsteuerung, die mit mindestens einem dem Gehäuse zugeordneten Aktor zur Signalisierung von durch die Spielablaufsteuerung gesendeten Informationen in Verbindung steht, wobei die Signale des als eine Infrarot-Leuchtdiode ausgebildeten Aktors für eine als eine Überwachungskamera ausgebildete Überwachungseinrichtung wahrnehmbar sind.

Bei dem als eine Infrarot-Leuchtdiode ausgebildeten Aktor handelt es sich um eine Lichtquelle, die bei einer entsprechenden Ansteuerung ein optisch für das menschliche Auge nicht wahrnehmbares Signal aussendet, das durch die als Überwachungskamera ausgebildete Überwachungseinrichtung erfassbar und entweder durch diese oder einen zugeordneten Rechner, also eine Datenverarbeitungseinrichtung, auswertbar und/oder auf einem Bildschirm für Service-Personal bzw. den Aufsteller des Unterhaltungsspielgerätes wahrnehmbar ist. Der das Unterhaltungsspielgerät betätigende bzw. unmittelbar beobachtende Spieler kann weder den Aktor noch die von ihm ausgesendeten Signale wahrnehmen und wird somit durch die Signalisierung nicht abgelenkt. Hierbei kann der Aktor mit üblicherweise in einem Spielcasino installierten Alarm- oder Überwachungssystemen kommunizieren. Demnach ist am Ort der Aufstellung, also des Betriebs, des Unterhaltungsspielgeräts kein Installationsaufwand erforderlich und in das System ist nicht, wie beispielsweise in ein Netzwerk, seitens unbefugter Dritter eindringbar. Das Unterhaltungsspielgerät kommuniziert über den Aktor nur unidirektional nach außen und nimmt keine Informationen über den Aktor entgegen. Die Anordnung des Aktors erfolgt beispielsweise an einer Vorderseite des Unterhaltungsspielgerätes bzw. an dessen Oberseite. Selbstverständlich ist auch eine rückseitige Befestigung möglich. Wichtig hierbei ist im Wesentlichen, dass der Aktor von Personen bzw. Objekten vor oder um das Unterhaltungsspielgerät nicht verdeckt wird und im Erfassungsbereich der Überwachungskamera angeordnet ist.

Bei der Infrarot-Leuchtdiode und der Überwachungskamera handelt es sich im Wesentlichen um bekannte Technik, bei der die Infrarot-Leuchtdiode ein Licht in einem für das menschliche Auge unsichtbaren Spektralbereich aussendet, das dennoch für eine standardisierte Überwachungskamera sichtbar bzw. für deren Chip erfassbar und damit auch auf einem Bildschirm darstellbar ist. Die lichtaussendende Infrarot-Leuchtdiode ist für den Spieler, also das menschliche Auge, nicht sichtbar und irritiert nicht bei der Betätigung des Unterhaltungsspielgerätes. Dennoch kann die Aufsicht des Spielcasinos bzw. das Service-Personal am Ort der Aufstellung auf einem im ServiceBereich aufgestellten Bildschirm die leuchtende Infrarot-Leuchtdiode erkennen. Bei der Überwachungskamera handelt es sich um eine Kamera, die zur Innenraumüberwachung des Spielcasinos ohnehin derart installiert ist, dass sie mit einer Aufzeichnungseinheit und/oder einem Bildschirm in kommuniziert. Durch die an der Front oder Oberseite des Gehäuses des Unterhaltungsspielgerätes angeordnete Infrarot-Leuchtdiode ist deren Lichtsignal für die üblicherweise an einer Gebäudedecke befestigte Überwachungskamera erfassbar und wird in der Regel nicht von einem vor dem Unterhaltungsspielgerät befindlichen Spieler verdeckt.

Um komplexe Informationen bzw. eine Vielzahl von Informationen bzw. Signalen für die Überwachungskamera erfassbar zur Verfügung stellen zu können, sind zweckmäßigerweise mehrere Infrarot-Leuchtdioden in einer Matrix angeordnet und einzeln ansteuerbar. Dementsprechend können definierte Lichtmuster, beispielsweise codiert, erzeugt werden, die von dem Service-Personal zu deuten sind. Es ist auch die Darstellung von Buchstaben oder dergleichen möglich. Um die Darstellung von alphanumerischen Zeichen oder dergleichen eindeutig erfassbar zu gestalten, ist den Infrarot-Leuchtdioden mindestens eine Blende zugeordnet ist, um eine 7-Segment-Anzeige bereit zu stellen.

Nach einer Weiterbildung ist die mindestens eine Infrarot-Leuchtdiode zur Signalisierung verschiedener Gerätezustände von der Spielablaufsteuerung ansteuerbar. In der Spielablaufsteuerung laufen eine Vielzahl gerätespezifischer Informationen zusammen und werden verarbeitet. Somit können auch hier die Informationen ausgewertet werden, um in Bedarfsfall das Service-Personal zu informieren, dass an dem Unterhaltungsspielgerät ein Service oder eine besondere Beobachtung bzw. Handlung erforderlich ist. Beispielsweise kann über die Spielablaufsteuerung auch eine Benutzung einer Schnittstelle erfasst und mittels der Infrarot-Leuchtdiode signalisiert werden.

Vorteilhafterweise zeigt die mindestens eine Infrarot-Leuchtdiode mindestens einen Maximal-Füllstand oder Minimal-Füllstand einer Kasse und/oder einer Auszahleinheit und/oder eine Häufung bestimmter Spiele und/oder eine definierte Tastenbeaufschlagung und/oder eine bestimmte Touchscreen-Betätigung und/oder einen Zustand einer Geldverarbeitungseinheit und/oder einen Füllstand eines Ticketspeichers und/oder einen Füllstand eines Ticketdruckers und/oder eine Störung an diesen Einheiten an. Muss beispielsweise die Kasse oder der Ticketspeicher geleert oder die Auszahleinheit oder der Ticketdrucker gefüllt werden, wird dies angezeigt und das Service-Personal kann die entsprechenden Tätigkeiten gezielt ausführen. Bei einer Häufung bestimmter Spiele oder einer definierten Tastenbeaufschlagung kann eine Manipulation vorliegen und das Service-Personal ist nach einer entsprechenden Information in der Lage das Unterhaltungsspielgerät besonders zu beobachten. Werden relativ viele gleichwertige Münzen oder dergleichen der Geldverarbeitungseinheit zugeführt, kann eine Manipulation vorliegen und die Spielablaufsteuerung steuert entsprechend die Infrarot-Leuchtdioden an, um Aufsichtspersonal auf diesen Zustand aufmerksam zu machen. Gleichermaßen kann eine Signalisierung einer Störung von Einheiten bzw. Komponenten des Unterhaltungsspielgerätes erfolgen, beispielsweise ein Papierstau im Ticketdrucker kann mittel der Infrarot-Leuchtdiode zur Darstellung gebracht werden.

In Ausgestaltung ist einer Gerätetür ein Schalter zur Erkennung des Schließzustandes der Gerätetür und/oder dem Gehäuse ein Erschütterungssensor zugeordnet, wobei der Schalter und/oder der Erschütterungssensor mit der Spielablaufsteuerung verbunden ist und die Spielablaufsteuerung eine Signaländerung mittels einer entsprechenden Ansteuerung der mindestens einen Infrarot-Leuchtdiode zur Anzeige bringt.

Zur Darstellung verschlüsselter Informationen ist die mindestens eine Infrarot-Leuchtdiode in ihrer Leuchtstärke und/oder Leuchtfrequenz codiert ansteuerbar. Die Leuchtstärke bzw. Leuchtfrequenz, also beispielsweise ein Blinken, können mittels der Überwachungskamera erfasst und beispielsweise mit einer rechnergesteuerten Bildauswertung dekodiert werden, um das Service-Personal bezüglich des Zustandes des Unterhaltungsspielgerätes zu informieren.

Zweckmäßigerweise ist die mindestens eine Infrarot-Leuchtdiode durch eine Abdeckblende verdeckt an dem Unterhaltungsspielgerät angebracht. Demnach ist die Infrarot-Leuchtdiode nicht sichtbar angeordnet. Selbstverständlich ist die Abdeckblende für infrarotes Licht durchlässig.

In weiterer Ausgestaltung ist die mindestens eine Infrarot-Leuchtdiode einer ausrichtbar an dem Gehäuse befestigten Halterung zugeordnet. Die Halterung kann gegenüber dem Gehäuse verdreht und/oder verschwenkt werden, um die Infrarot-Leuchtdiode bzw. die Infrarot-Leuchtdioden-Matrix derart auszurichten, dass sie sich im Aufnahmebereich der Überwachungskamera befindet und nicht verdeckt ist. Die Halterung selbst kann an einer beliebigen Stelle des Gehäuses des Unterhaltungsspielgerätes befestigt sein.

Ein Überwachungssystem umfasst mindestens ein Unterhaltungsspielgerät mit einem Gehäuse zur Aufnahme einer mit einer Anzeigeeinrichtung zur Darstellung des Spielablaufs verbundenen rechnergesteuerten Spielablaufsteuerung, die mit mindestens einem dem Gehäuse zugeordneten Aktor zur Signalisierung von durch die Spielablaufsteuerung gesendeten Informationen in Verbindung steht, wobei die Signale des als eine Infrarot-Leuchtdiode ausgebildeten Aktors für eine als eine Überwachungskamera ausgebildete Überwachungseinrichtung wahrnehmbar sind, und einen mit der Überwachungskamera gekoppelten Bildschirm.

Selbstverständlich können mit einer, insbesondere schwenkbar an einer Gebäudedecke angeordneten, Überwachungskamera mehrere Unterhaltungsspielgeräte überwacht werden, wobei die eine Überwachungskamera oder mehrere Überwachungskameras mit dem Bildschirm, der vorzugsweise an einen Rechner, insbesondere einer Datenverarbeitungseinrichtung, angeschlossen ist, gekoppelt sind. In Abhängigkeit von der Größe des Überwachungssystems bzw. der Anzahl von Überwachungskameras und/oder Unterhaltungsspielgeräten können auch mehrere Bildschirme vorhanden sein.

Nach einer Weiterbildung sind die Überwachungskamera und der Bildschirm Bestandteile eines mobilen Gerätes oder separate Komponenten. Beispielsweise können die Überwachungskamera und der Bildschirm Bestandteile eines Smartphone oder eines Tablet-Computers sein. Beide mobilen Geräte sind ausgestattet, um die infraroten Lichtsignale zu empfangen, gegebenenfalls auszuwerten und diesbezügliche Bilder anzuzeigen. Bei der Verwendung des Smartphone oder des Tablet-Computers kann auch deren Rechner und Eingabeeinrichtung genutzt werden. Selbstverständlich kann es sich bei der Überwachungskamera um ein separates Aufnahmegerät und bei dem Bildschirm um einen mit der Überwachungskamera verbundenen Monitor oder Fernsehbildschirm handeln.

Vorzugsweise wertet eine Bildauswerteeinheit das von der Überwachungskamera erfasste und an einen Rechner übermittelte Bild auf ein vorliegendes Signal der Infrarot-Leuchtdiode aus und der Rechner aktiviert bei einem erkannten Signal eine für Aufsichtspersonal wahrnehmbare Alarmierungseinheit. Die Bildauswerteeinheit erfasst und verarbeitet die Signale der Infrarot-Leuchtdioden, also verschiedene Muster, die leuchtende Infrarot-Leuchtdioden darstellen oder auch Leuchtintensitäten bzw. Blinkgeschwindigkeiten. Die Alarmierungseinheit kann ein optisch und/oder akustisch wahrnehmbares Signal erzeugen, um das Aufsichtspersonal auf einen bestimmten Gerätezustand aufmerksam zu machen. Die Alarmierungseinheit kann unmittelbar mit den Rechner gekoppelt sein oder auch über ein Netzwerk, beispielsweise das Internet, mit dem Rechner kommunizieren.

Zweckmäßigerweise speichert eine mit der Überwachungskamera und/oder dem Rechner verbundene Speichereinheit Bilddaten der Überwachungskamera. Die verschiedenen erfassten Signale der Infrarot-Leuchtdioden lassen sich sonach archivieren und zu einem späteren Zeitpunkt auswerten, beispielsweise wenn unterhaltungsspielgeräteinterne Daten einen Anlass dazu geben, beispielsweise auf einen Manipulationsversuch schließen lassen, der mittels der Bilddaten der Überwachungskamera nachvollziehbar bzw. auswertbar ist. Die Speichereinheit kann integraler Bestandteil der Kamera oder an den Rechner angeschlossen sein.

Um bestimmte signalisierte und durch die mindestens eine Infrarot-Leuchtdiode angezeigte Ereignisse den gespeicherten Bilddaten relativ einfach zuzuordnen, speichert nach einer Weiterbildung die Speichereinheit die Bilddaten mit einem zugeordneten Zeitstempel, wobei der Überwachungskamera und/oder dem Rechner ein Zeitglied zugeordnet ist. Derartige Zeitglieder sind in den fraglichen elektronischen Geräten häufig verbaut. Hierbei ist es möglich, zumindest ein Datum und eine Uhrzeit den Bilddaten zuzuordnen, beispielsweise als ein Speicher- bzw. Aufnahmedatum und/oder diese Angaben vorzugsweise dauerhaft in das Bild einzublenden.

Vorzugsweise erfolgt die Aktivierung der Alarmierungseinheit und/oder Speicherung der Bilddaten in Abhängigkeit von einer durch Auswertemittel des Rechners festgestellten Änderung des Signals der Infrarot-Leuchtdiode, wobei die Auswertemittel als eine Hardware-Schaltung oder ein Software-Modul ausgebildet sind. Bei der Hardware-Schaltung kann es sich beispielsweise um ein so genanntes Field Programmable Gate Array (FPGA), handeln.

Bevorzugt umfasst die Alarmierungseinheit ein personenbezogenes Informationsgerät. Das Informationsgerät kann beispielsweise in Form eines Smartphone oder dergleichen ausgebildet sein und das Service-Personal über die durch die Infrarot-Leuchtdiode signalisierten und von der Bildauswerteeinheit ausgewerteten Zustände des Unterhaltungsspielgerätes informieren.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert.

Es zeigt:
- Fig. 1.: eine vereinfachte Darstellung eines Überwachungssystems,
- Fig. 2.: eine vereinfachte Teildarstellung vom Komponenten des Überwachungssystems nach Fig. 1,
- Fig. 3.: eine Darstellung der Komponenten des Überwachungssystems nach Fig. 2 in alternativer Ausgestaltung,
- Fig. 4.: eine Darstellung der Komponenten des Überwachungssystems nach Fig. 2 in weiterer alternativer Ausgestaltung,

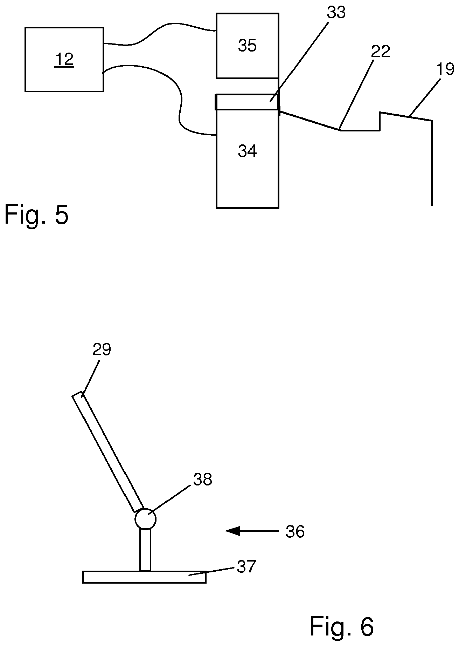

- Fig. 5.: eine stark vereinfachte schematische Seitendarstellung der Einzelheit V nach Fig. 1 in alternativer Ausgestaltung und
- Fig. 6.: eine schematische Darstellung einer Halterung für Komponenten des Überwachungssystems.

Das Überwachungssystem umfasst ein Unterhaltungsspielgerät 1, dem eine gebäudeseitig befestigte Überwachungskamera 2 zugeordnet ist, die über einen Rechner 3 einer Datenverarbeitungseinrichtung an einen Bildschirm 4 angeschlossen ist. Zur Speicherung von mit der Überwachungskamera 2 aufgenommenen Bilddaten bzw. Überwachungsdaten ist eine Speichereinheit 26 an den Rechner 3 bzw. die Überwachungskamera 2 angeschlossen.

Das Unterhaltungsspielgerät 1 umfasst ein Standgehäuse 5 mit einem oberseitigen Kopfteil 6 mit einem in diesem Ausführungsbeispiel gebogenen Rahmenteil 7, zwei gegenüberliegenden Seitenwänden 8, denen stirnseitig Rahmen 9 zugeordnet sind, einem Standfuß 10 mit einer hinterleuchtbaren Deckplatte 11, und selbstverständlich einer Rückwand. In dem Standgehäuse 5 ist eine Spielablaufsteuerung 12 untergebracht, die mit einer Geldverarbeitungseinheit 27 gekoppelt ist, wobei die Geldverarbeitungseinheit 27 einen nicht dargestellten Münzprüfer, eine Münzkasse und eine Münzauszahleinheit umfasst. Der Münzprüfer ist über einen hinter dem zugeordneten Rahmen 9 untergebrachten Münzschacht mit einem in dem Rahmen 9 installierten Münzeinwurfschlitz 13 verbunden. Unterhalb des Münzeinwurfschlitzes 13 befindet sich eine Rückgabetaste 14 in dem Rahmen 9, um in bekannter weise Geld auszuzahlen. Zwischen dem Standfuß 10 und einer Bodenplatte 15 des Standgehäuses 5 des Unterhaltungsspielgerätes 1 ist eine sich in diesem Ausführungsbeispiel über die gesamte Breite der Front des Standgehäuses 5 erstreckende Fußablage 16 vorgesehen.

Zum Verschließen des Standgehäuses 1 sind über entsprechende Scharniere zwei Frontklappen 17 gegenläufig schwenkbar angelenkt. In der oberen Frontklappe 17 sind zwei übereinander angeordnete Anzeigeeinrichtungen 18 untergebracht, die zur Darstellung von Spielinhalten, Spielregeln und/oder anderen optisch wahrnehmbaren Inhalten dienen und mit der Spielablaufsteuerung verbunden sind. Die Anzeigeeinrichtungen 18 können beliebig ausgestaltet sein, insbesondere als TFT-, und/oder LED- und/oder OLED- und/oder Plasma-Anzeigen oder dergleichen. Der Verschlusszustand der beiden Frontklappen 17 kann durch einen Schalter 28 zur Erkennung des Schließzustandes erfasst werden, wobei der Schalter 28 mit der Spielablaufsteuerung 12 in Verbindung steht.

Der unteren Frontklappe 17 ist ein Pult 19 zugeordnet. In dem Pult 19 befinden sich mehrere als Tastschalter 20 ausgebildete Bedienelemente 21, die mit der Spielablaufsteuerung12 verbunden sind. Seitlich der Bedienelemente 21 ist einerseits eine im geschlossenen Zustand der unteren Fronklappe 17 über Schlitze 23 für Münzen mit der Geldverarbeitungseinheit 27 in Wirkverbindung stehende Geldausgabeschale 22 und andererseits eine einen Scheinschlitz aufweisende und im geschlossenen Zustand der unteren Fronklappe 17 mit einer in dem Standgehäuse 5 untergebrachten Geldscheinverarbeitungseinheit gekoppelte Geldscheineingabe-/ Geldscheinausgabeschale 24 in dem Pult 19 untergebracht, wobei die Geldscheinverarbeitungseinheit beispielsweise eine Geldscheinkasse und/oder einen Dispenser umfasst und mit der Spielablaufsteuerung 12 verbunden ist.

Zusätzlich oder alternativ zu der Geldscheinverarbeitungseinheit und/oder einer Münzverarbeitung kann ein Ticketsystem (TITO) installiert sein, das im Wesentlichen ein Ticket-Lesegerät 33 zur Erfassung von auf das Ticket aufgedruckten Informationen jeglicher Art, beispielsweise ein Barcode- oder QR-Code-Lesegerät, mit einem nachgeordneten Ticket-Speicher 34 und einen Ticket-Drucker 35 zur Erstellung auszugebender Tickets umfasst. Das Ticket-Lesegerät 33, der Ticket-Speicher 34 und der Ticket-Drucker sind mit der Spielablaufsteuerung 12 verbunden, um ausgelesene Daten zu verarbeiten und Daten für den Druck eines zu erstellenden und auszugebenden Tickets aufzubereiten.

In dem Rahmenteil 7 des Standgehäuses 5 des Unterhaltungsspielgerätes 1 ist mindestens eine Infrarot-Leuchtdiode 25 installiert, die mit der Spielablaufsteuerung 12 gekoppelt ist, um verschiedene Zustände des Unterhaltungsspielgerätes 1 für die Überwachungskamera 2 sichtbar und für das menschliche Auge unsichtbar zu signalisieren.

Die Platzierung der mindestens einen Infrarot-Leuchtdiode 25 erfolgt an einer derartigen Stelle des Unterhaltungsspielgerätes 1, dass sie von einem Benutzer bzw. Spieler gegenüber der Überwachungskamera 3 nicht verdeckt wird bzw. sich die Infrarot-Leuchtdiode 25 stets im Erfassungsbereich der Überwachungskamera 3 befindet.

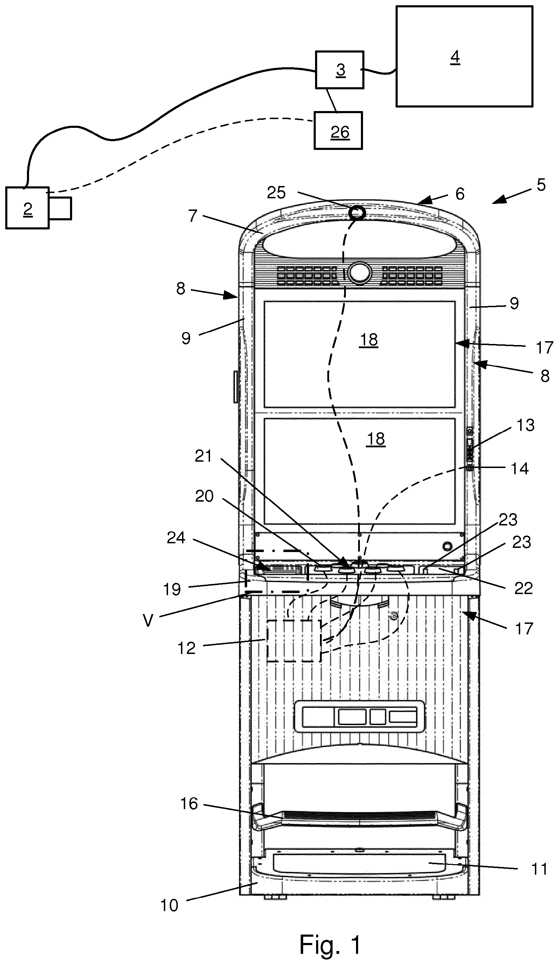

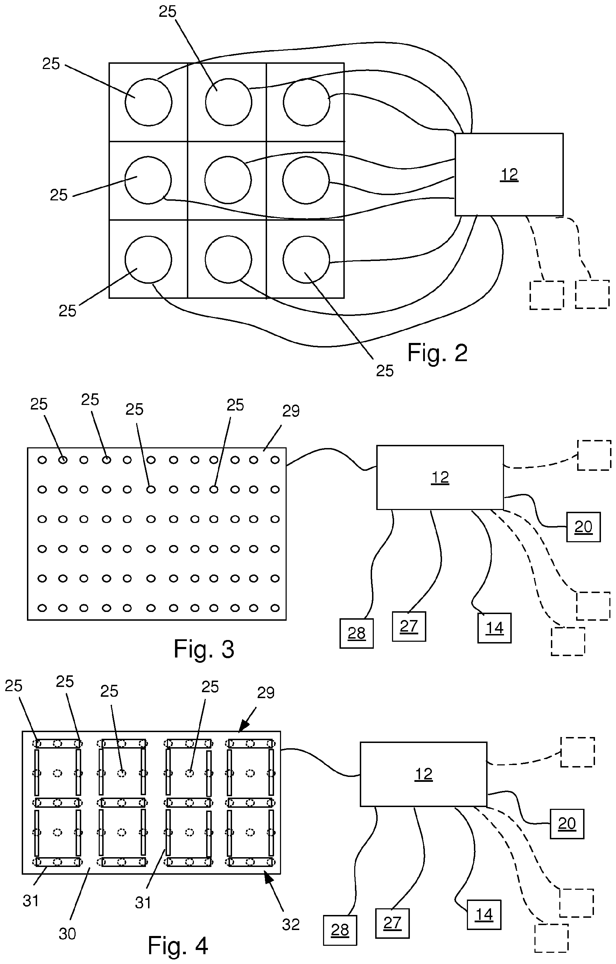

Im Ausführungsbeispiel gemäß Fig. 1 ist lediglich eine einzelne Infrarot-Leuchtdiode 25 angedeutet. Es ist selbstverständlich möglich, wie in den Fig. 2 bis 4 dargestellt, mehrere Infrarot-Leuchtdioden 25 anzuordnen, beispielsweise spalten- und/oder zeilenförmig zueinander ausgerichtet, um aufwändig darstellbare Signale zu erzeugen. Die Infrarot-Leuchtdioden 25 können durch die Spielablaufsteuerung 12 einzeln angesteuert werden, auch mit einer unterschiedlichen Intensität leuchten oder in beliebiger Frequenz blinken. Hierbei werden die Infrarot-Leuchtdioden 25 beispielsweise als eine Art Lichtpunkte, auf einem gemeinsamen Träger 29 installiert, der beispielsweise auch Kühlrippen oder dergleichen umfassen kann. Im Weiteren weist der Träger 29 die erforderlichen Strompfade zur Ansteuerung der einzelnen Infrarot-Leuchtdioden 25 sowie Anschlüsse zur Verbindung mit der innerhalb des Unterhaltungsspielgerätes 1 installierten Spielablaufsteuerung 12 auf.

Die auf dem Träger 29 angeordneten Infrarot-Leuchtdioden 25 lassen sich durch die Spielablaufsteuerung derart ansteuern, dass sie in beliebigen Mustern leuchten. Die Muster können einen Code darstellen, der nach seiner Entschlüsselung, beispielsweise durch das den Bildschirm 4 beobachtende Servicepersonal, über bestimmte Gerätezustände informiert. Die Entschlüsselung kann auch durch eine Bildauswerteeinrichtung des Rechners 3 erfolgen und die durch die Infrarot-Leuchtdioden 25 dargestellte und die Überwachungskamera 2 erfasste Information bezüglich des Gerätezustandes wird im Klartext auf dem Bildschirm 4 angezeigt. Bei den Mustern kann es sich auch um Informationen im Klartext handeln, indem die Infrarot-Leuchtdioden 25 durch die Spielablaufsteuerung 12 zur Darstellung alphanumerischer Zeichen, auch als so genannter Lauftext, angesteuert werden. Der Bildschirm 4 und die Überwachungskamera 2 können Bestandteile eines Smartphone oder Tablet-Computers sein, mit dem das Servicepersonal die Lichtsignale der Infrarot-Leuchtdioden 25 erfasst, auswertet und zur Anzeige bringt.

Damit eindeutige sowie leicht zu erfassende Symbole durch die auf dem Träger 29 angeordneten Infrarot-Leuchtdioden 25 darstellbar sind, ist den Infrarot-Leuchtdioden 25 und/oder dem Träger 29 eine Blende 30 zugeordnet, die schlitzförmige Öffnungen 31 aufweist, so dass eine 7-Segment-Anzeige 32 bereitgestellt ist. Die 7-Segment-Anzeige 32 kann selbstverständlich einstellig oder mehrstellig, also zur Darstellung eines oder mehrerer Zeichen ausgeführt sein. Die Infrarot-Leuchtdioden 25 werden durch die Spielablaufsteuerung 12 derart angesteuert, dass sie definierte Öffnungen 31 der Blende 30 hinterleuchten, um die erforderliche Information durch entsprechend zugeordnete Zeichen für die Überwachungskamera 2 wahrnehmbar und auf dem damit verbundenen Bildschirm 4 darstellbar anzuzeigen. Selbstverständlich sind auch in dieser Ausgestaltung Informationen codiert oder im Klartext, auch als Lauftext, anzeigbar.

Zur verdeckten, nämlich optisch für den Benutzer nicht wahrnehmbaren, Anordnung der Infrarot-Leuchtdioden 25 ist eine für Infrarot-Lichtstrahlung durchlässige Abdeckblende vorgesehen, die in das Kopfteil 6 integriert sein kann.

Alternativ kann der Träger 29 mit den darauf angeordneten Infrarot-Leuchtdioden 25 mit einer Halterung 36 verbunden werden, die einen Fuß 37 zur Festlegung an dem Standgehäuse 5 des Unterhaltungsspielgerätes 1 und ein einstellbares Gelenk 38 zur Ausrichtung des Trägers 29 bzw. der darauf angeordneten Infrarot-Leuchtdioden 25 gegenüber der Überwachungskamera 2 umfasst. Auch an der Halterung 36 oder dem Träger 29 ist die Anordnung einer für Infrarot-Lichtstrahlung durchlässigen Abdeckblende möglich.

Ist beispielsweise die Münzkasse des Unterhaltungsspielgerätes 1 voll und muss geleert oder die Münzauszahleinheit leer und muss gefüllt werden, dann liegen entsprechende Signale an der Spielablaufsteuerung 12 an, die wiederum die mindestens eine Infrarot-Leuchtdiode 25 derart ansteuert, dass sie in einer bestimmten Art und Weise leuchtet. Eine dem Rechner 3 zugeordnete Bildauswerteeinheit wertet das von der Überwachungskamera 3 aufgenommene und an den Rechner 3 gelieferte Bild hinsichtlich des Leuchtpunktes bzw. des Musters von Leuchtpunkten der von der Spielablaufsteuerung 12 zum Leuchten angeregten Infrarot-Leuchtdioden 25 aus und stellt eine entsprechende Information für das Service-Personal auf dem mit dem Rechner 3 gekoppelten Bildschirm 4 dar. Das Service-Personal ist somit in Lage an dem betreffenden Unterhaltungsspielgerät 1 den erkannten Mangel zu beheben und kann diese Tätigkeit planen, um einen Spieler nicht zu stören. Die von der Überwachungskamera aufgenommenen Bilder lassen sich mittels der Speichereinheit 26 zur zeitversetzten Auswertung speichern. Um die Zuordnung der gespeicherten Bilddaten zu bestimmten signalisierten Ereignissen zu vereinfachen, kann die Speicherung eines Zeitstempels erfolgen, wobei die relevanten zeitbezogenen Daten, wie die Uhrzeit und/oder das Datum der Aufnahme der Bilddaten, von einem Zeitglied der Überwachungskamera 2 oder des Rechners 3 stammt.

Im Weiteren erfolgt eine Signalisierung mittels der Infrarot-Leuchtdioden 25, falls an der an die Spielablaufsteuerung 12 angeschlossenen Geldverarbeitungseinheit 27 ein ungewöhnlicher, also unregelmäßiger beziehungsweise außerplanmäßiger Zustand auftritt, der einen Rückschluss auf eine Manipulation zulässt. Dies ist beispielsweise der Fall, wenn Münzen oder Geldscheine oder dergleichen Mittel zum Bezahlen in einer verhältnismäßig großen Menge zur Einzahlung kommen. Auch eine Betätigung der mit der Spielablaufsteuerung 12 verbundenen Rückgabetaste 14 oder eines der ebenfalls mit der Spielablaufsteuerung 12 gekoppelten Tastschalter 20 kann durch entsprechend angesteuertes Aufleuchten der Infrarot-Leuchtdioden 25 auf dem Bildschirm 4 dargestellt werden. Darüber hinaus stellt beispielsweise eine nicht ordnungsgemäß geschlossene Frontklappe 17 einen unerwünschten Zustand dar, der mittels des mit der Spielablaufsteuerung 12 verbundenen Schalters 28 erfasst und durch die Infrarot-Leuchtdioden 25 dargestellt wird.

Gleichermaßen kann der Füllstand des Ticket-Speichers 34 signalisiert werden, beispielsweise im Fall einer notwendigen Leerung oder ein Zustand des Ticket-Druckers 35 wird zu Anzeige gebracht, beispielsweise wenn ein Papiervorrat ein Minimum erreicht und das Service-Personal eingreifen muss, um einen störungsfreien Betrieb des Unterhaltungsspielgerätes 1 zu ermöglichen.

Es lässt sich auch über bestimmte Spielzustände informieren. Wenn beispielsweise ein Risiko-Spiel oder ein Sonder-Spiel oder dergleichen gewährt wird oder abläuft, kann die Spielablaufsteuerung 12, an der diese Informationen anliegen, durch eine entsprechende Ansteuerung der Infrarot-Leuchtdioden 25 das den entsprechenden Bildschirm 4 beobachtende Service-Personal informieren.

**Bezugszeichen**

| | | | |
|---|---|---|---|
| 1. | Unterhaltungsspielgerät | 27. | Geldverarbeitungseinheit |
| 2. | Überwachungskamera | 28. | Schalter |
| 3. | Rechner | 29. | Träger |
| 4. | Bildschirm | 30. | Blende |
| 5. | Standgehäuse | 31. | Öffnung |
| 6. | Kopfteil | 32. | 7-Segment-Anzeige |
| 7. | Rahmenteil | 33. | Ticket-Lesegerät |
| 8. | Seitenwand | 34. | Ticket-Speicher |
| 9. | Rahmen | 35. | Ticket-Drucker |
| 10. | Standfuß | 36. | Halterung |
| 11. | Deckplatte | 37. | Fuß |
| 12. | Spielablaufsteuerung | 38. | Gelenk |
| 13. | Münzeinwurfschlitz | | |
| 14. | Rückgabetaste | | |
| 15. | Bodenplatte | | |
| 16. | Fußablage | | |
| 17. | Frontklappe | | |
| 18. | Bildschirm | | |
| 19. | Pult | | |
| 20. | Tastschalter | | |
| 21. | Bedienelement | | |
| 22. | Geldausgabeschale | | |
| 23. | Schlitz | | |
| 24. | Geldscheineingabe-/ Geldscheinausgabeschale | | |
| 25. | Infrarot-Leuchtdiode | | |
| 26. | Speichereinheit | | |

## Patentansprüche

1. Überwachungssystem aufweisend
ein Unterhaltungsspielgerät mit einem Gehäuse zur Aufnahme einer mit einer Anzeigeeinrichtung (18) zur Darstellung eines Spielablaufs verbundenen rechnergesteuerten Spielablaufsteuerung (12), die mit mindestens einem dem Gehäuse zugeordneten Aktor zur Signalisierung von durch die Spielablaufsteuerung (12) gesendeten Informationen in Verbindung steht,
eine Überwachungskamera (2) und
eine Bildauswerteeinheit,
wobei Signale des als mindestens eine Infrarot-Leuchtdiode (25) ausgebildeten Aktors für die Überwachungskamera (2) wahrnehmbar sind, und die mindestens eine Infrarot-Leuchtdiode (25) zur Signalisierung verschiedener Gerätezustände von der Spielablaufsteuerung (12) ansteuerbar ist, und
wobei die Bildauswerteeinheit ein von der Überwachungskamera (2) erfasstes Bild auf ein vorliegendes Signal der mindestens einen Infrarot-Leuchtdiode (25) auswertet und das Signal der mindestens einen Infrarot-Leuchtdiode (25) erfasst und verarbeitet.

2. Überwachungssystem nach Anspruch 1, ***dadurch gekennzeichnet, dass*** der Aktor mehrere Infrarot-Leuchtdioden (25) aufweist, die in einer Matrix angeordnet und einzeln ansteuerbar sind.

3. Überwachungssystem nach Anspruch 2, ***dadurch gekennzeichnet, dass*** den Infrarot-Leuchtdioden (25) mindestens eine Blende (30) zugeordnet ist, um eine 7-Segment-Anzeige (32) bereit zu stellen.

4. Überwachungssystem nach einem der Ansprüche 1 bis 3, ***dadurch gekennzeichnet, dass*** die mindestens eine Infrarot-Leuchtdiode (25) mindestens einen Maximal-Füllstand oder Minimal-Füllstand einer Kasse und/oder einer Auszahleinheit und/oder eine Häufung bestimmter Spiele und/oder eine definierte Tastenbeaufschlagung und/oder eine bestimmte Touchscreen-Betätigung und/oder einen Zustand einer Geldverarbeitungseinheit und/oder einen Füllstand eines Ticketspeichers und/oder einen Füllstand eines Ticketdruckers und/oder eine Störung an diesen Einheiten anzeigt.

5. Überwachungssystem nach einem der Ansprüche 1 bis 4, ***dadurch gekennzeichnet, dass*** einer Gerätetür des Unterhaltungsspielgeräts ein Schalter (28) zur Erkennung des Schließzustandes der Gerätetür und/oder dem Gehäuse ein Erschütterungssensor zugeordnet ist, wobei der Schalter (28) und/oder der Erschütterungssensor mit der Spielablaufsteuerung (12) verbunden ist und die Spielablaufsteuerung (12) eine Signaländerung mittels einer entsprechenden Ansteuerung der mindestens einen Infrarot-Leuchtdiode (25) zur Anzeige bringt.

6. Überwachungssystem nach einem der Ansprüche 1 bis 5, ***dadurch gekennzeichnet, dass*** die mindestens eine Infrarot-Leuchtdiode (25) in ihrer Leuchtstärke und/oder Leuchtfrequenz codiert ansteuerbar ist.

7. Überwachungssystem nach einem der Ansprüche 1 bis 6, ***dadurch gekennzeichnet, dass*** die mindestens eine Infrarot-Leuchtdiode (25) durch eine Abdeckblende verdeckt an dem Unterhaltungsspielgerät angebracht ist.

8. Überwachungssystem nach einem der Ansprüche 1 bis 7, ***dadurch gekennzeichnet, dass*** die mindestens eine Infrarot-Leuchtdiode (25) einer ausrichtbar an dem Gehäuse befestigten Halterung (36) zugeordnet ist.

9. Überwachungssystem nach einem der Ansprüche 1 bis 8, ***dadurch gekennzeichnet, dass*** das Überwachungssystem ferner einen mit der Überwachungskamera (2) gekoppelten Bildschirm (4) aufweist.

10. Überwachungssystem nach Anspruch 9, ***dadurch gekennzeichnet, dass*** die Überwachungskamera (2) und der Bildschirm (4) Bestandteile eines mobilen Gerätes oder separate Komponenten sind.

11. Überwachungssystem nach einem der Ansprüche 1 bis 10, ***dadurch gekennzeichnet, dass*** das Überwachungssystem ferner einen Rechner (3) und eine Alarmierungseinheit aufweist, wobei die Bildauswerteeinheit das von der Überwachungskamera (2) erfasste und an den Rechner (3) übermittelte Bild auf ein vorliegendes Signal der mindestens einen Infrarot-Leuchtdiode (25) auswertet und der Rechner (3) bei einem erkannten Signal die für Aufsichtspersonal wahrnehmbare Alarmierungseinheit aktiviert.

12. Überwachungssystem nach Anspruch 11, ***dadurch gekennzeichnet, dass*** eine mit der Überwachungskamera (2) und/oder dem Rechner (3) verbundene Speichereinheit (26) Bilddaten der Überwachungskamera (2) speichert.

13. Überwachungssystem nach Anspruch 12, ***dadurch gekennzeichnet, dass*** die Speichereinheit (26) die Bilddaten mit einem zugeordneten Zeitstempel speichert, wobei der Überwachungskamera (2) und/oder dem Rechner (3) ein Zeitglied zugeordnet ist.

14. Überwachungssystem nach einem der Ansprüche 11 bis 13, ***dadurch gekennzeichnet, dass*** die Aktivierung der Alarmierungseinheit und/oder Speicherung der Bilddaten in Abhängigkeit von einer durch Auswertemittel des Rechners (3) festgestellten Änderung des Signals der mindestens einen Infrarot-Leuchtdiode (25) erfolgt, wobei die Auswertemittel als eine Hardware-Schaltung oder ein Software-Modul ausgebildet sind.

15. Überwachungssystem nach Anspruch 11 oder 14, ***dadurch gekennzeichnet, dass*** die Alarmierungseinheit ein personenbezogenes Informationsgerät umfasst.

## Claims

1. A monitoring system comprising
an amusement machine having an enclosure for accommodating a computer-controlled play control unit (12), which is connected to a display device (18) for displaying a game play and which is connected to at least one actuator allocated to the enclosure and intended for signaling information sent by the play control unit (12),
a security camera (2) and
an image analysis unit
wherein signals from the actuator, which is embodied as at least one infrared light emitting diode (25), can be detected by the security camera (2) and the play control unit (12) can drive the at least one infrared light emitting diode (25) to signal various machine states, and
wherein the image analysis unit analyzes an image, which is detected by the security camera (2), for the presence of a signal from the at least one infrared light emitting diode (25) and detects and processes the signal from the at least one infrared light emitting diode (25).

2. The monitoring system as claimed in claim 1, **characterized in that** the actuator comprises a plurality of infrared light emitting diodes (25), which are arranged in an array and can be driven individually.

3. The monitoring system as claimed in claim 2, **characterized in that** at least one mask (30) is assigned to the infrared light emitting diodes (25) in order to provide a 7-segment display (32).

4. The monitoring system as claimed in any one of claims 1 to 3, **characterized in that** the at least one infrared light emitting diode (25) indicates at least a maximum contents level or minimum contents level of a cash box and/or of a payout unit and/or a cluster of certain games and/or a defined keystroke and/or a specific touchscreen operation and/or a status of a money processing unit and/or a contents level of a ticket store and/or a contents level of a ticket printer and/or a fault with these units.

5. The monitoring system as claimed in any one of claims 1 to 4, **characterized in that** a machine door of the amusement machine is allocated a switch (28) for detecting the closure state of the machine door, and/or the enclosure is allocated a vibration sensor, which switch (28) and/or vibration sensor is connected to the play control unit (12), and the play control unit (12) indicates a signal change by driving the at least one infrared light emitting diode (25) suitably.

6. The monitoring system as claimed in any one of claims 1 to 5, **characterized in that** the at least one infrared light emitting diode (25) can be driven such that coding is provided by the light intensity and/or light frequency of the at least one infrared light emitting diode.

7. The monitoring system as claimed in any one of claims 1 to 6, **characterized in that** the at least one infrared light emitting diode (25) is mounted on the amusement machine such that it is concealed by a cover plate.

8. The monitoring system as claimed in any one of claims 1 to 7, **characterized in that** the at least one infrared light emitting diode (25) is assigned to a mount (36) that is fixed to the enclosure such that its orientation can be adjusted.

9. The monitoring system as claimed in any one of claims 1 to 8, **characterized in that** the monitoring system further comprises a screen (4) coupled to the security camera (2).

10. The monitoring system as claimed in claim 9, **characterized in that** the security camera (2) and the screen (4) are parts of a mobile device or are separate components.

11. The monitoring system as claimed in any one of claims 1 to 10, **characterized in that** the monitoring system further comprises a processor (3) and an alarm unit, wherein the image analysis unit analyzes the image, which is detected by the security camera (2) and transmitted to the processor (3), for the presence of a signal from the at least one infrared light emitting diode (25), and when a signal is identified, the processor (3) actuates the alarm unit that can be discerned by surveillance personnel.

12. The monitoring system as claimed in claim 11, **characterized in that** a memory unit (26) connected to the security camera (2) and/or to the processor (3) stores image data from the security camera (2).

13. The monitoring system as claimed in claim 12, **characterized in that** the memory unit (26) stores the image data with an allocated time stamp, wherein a timer is assigned to the security camera (2) and/or to the processor (3).

14. The monitoring system as claimed in any one of claims 11 to 13, **characterized in that** the alarm unit is actuated and/or the image data is stored on the basis of a change in the signal from the at least one infrared light emitting diode (25), which change is ascertained by analysis means of the processor (3), said analysis means being in the form of a hardware circuit or a software module.

15. The monitoring system as claimed in either claim 11 or claim 14, **characterized in that** the alarm unit comprises a personal information device.

## Revendications

1. Système de surveillance présentant
un appareil de jeu de divertissement avec un boîtier pour recevoir une commande de déroulement de jeu (12) commandée par ordinateur et branchée à un dispositif d'affichage (18) pour représenter le déroulement d'un jeu, ladite commande est en connexion avec au moins un acteur attribué au boîtier pour signaler des informations envoyées par la commande de déroulement de jeu (12),
une caméra de surveillance (2) et
une unité d'interprétation d'image,
les signaux de l'acteur formé d'au moins une diode lumineuse infrarouge (25) étant perceptibles pour la caméra de surveillance (2), et l'au moins une diode lumineuse infrarouge (25) pouvant être commandée de la commande de déroulement de jeu (12) pour signaler différents états de l'appareil, et l'unité d'interprétation d'image interprétant une image saisie par la caméra de surveillance (2) à un signal présent de l'au moins une diode lumineuse infrarouge (25) et le signal de l'au moins une diode lumineuse infrarouge (25) saisissant et traitant.

2. Système de surveillance selon la revendication 1, **caractérisé en ce que** l'acteur présente plusieurs diodes lumineuses infrarouges (25) qui sont disposées dans une matrice et peuvent être commandées individuellement.

3. Système de surveillance selon la revendication 2, **caractérisé en ce qu'**au moins un cache (30) est attribué aux diodes lumineuses infrarouges (25) afin de mettre un afficheur à 7 segments (32) à disposition.

4. Système de surveillance selon l'une des revendications 1 à 3, **caractérisé en ce que** l'au moins une diode lumineuse infrarouge (25) indique au moins un niveau de remplissage maximum ou un niveau de remplissage minimum d'une caisse et/ou d'une unité de paiement et/ou un cumul de jeux précis et/ou une pression de touche définie et/ou un actionnement déterminé par écran tactile et/ou un état d'une unité de traitement de l'argent et/ou un niveau de remplissage d'une imprimante de tickets et/ou un dérangement sur ces unités.

5. Système de surveillance selon l'une des revendications 1 à 4, **caractérisé en ce qu'**un commutateur (28) destiné à identifier l'état de fermeture de la porte d'appareil est attribué à une porte d'appareil de l'appareil de jeu de divertissement et/ou un capteur de chocs est attribué au boîtier, le commutateur (28) et/ou le capteur de chocs étant branchés à la commande de déroulement de jeu (12) et la commande de déroulement de jeu (12) affichant un changement de signal à l'aide d'une commande correspondante de l'au moins une diode lumineuse infrarouge (25).

6. Système de surveillance selon l'une des revendications 1 à 5, **caractérisé en ce que** l'intensité lumineuse et/ou la fréquence lumineuse de l'au moins une diode lumineuse infrarouge (25) peuvent être commandées par code.

7. Système de surveillance selon l'une des revendications 1 à 6, **caractérisé en ce que** l'au moins une diode lumineuse infrarouge (25) dissimulée par un cache est apposée à l'appareil de jeu de divertissement.

8. Système de surveillance selon l'une des revendications 1 à 7, **caractérisé en ce que** l'au moins une diode lumineuse infrarouge (25) est attribuée à un support (36) fixé orientable sur le boîtier.

9. Système de surveillance selon l'une des revendications 1 à 8, **caractérisé en ce que** le système de surveillance présente également un écran (4) branché à la caméra de surveillance (2).

10. Système de surveillance selon la revendication 9, **caractérisé en ce que** la caméra de surveillance (2) et l'écran (4) font partie d'un appareil mobile ou de composants à part.

11. Système de surveillance selon l'une des revendications 1 à 10, **caractérisé en ce que** le système de surveillance présente également un ordinateur (3) et une unité d'alarme, l'unité d'évaluation d'image évaluant l'image saisie par la caméra de surveillance (2) et transmise à l'ordinateur (3) à un signal présent de l'au moins une diode lumineuse infrarouge (25) et l'ordinateur (3) activant l'unité d'alarme perceptible par le personnel de surveillance à un signal détecté.

12. Système de surveillance selon la revendication 11, **caractérisé en ce qu'**une unité de mémoire (26) branchée à la caméra de surveillance (2) et/ou à l'ordinateur (3) enregistre des données d'images de la caméra de surveillance (2).

13. Système de surveillance selon la revendication 12, **caractérisé en ce que** l'unité de mémoire (26) enregistre les données d'images avec un horodateur attribué, un minuteur étant attribué à la caméra de surveillance (2) et/ou à l'ordinateur (3).

14. Système de surveillance selon l'une des revendications 11 à 13, **caractérisé en ce que** l'unité d'alarme est activée et/ou les données d'images sont enregistrées en fonction d'un changement du signal de l'au moins une diode lumineuse infrarouge (25) identifié par des moyens d'analyse de l'ordinateur (3), les moyens d'analyse étant formés comme une commutation matérielle ou un module logiciel.

15. Système de surveillance selon la revendication 11 ou 14, **caractérisé en ce que** l'unité d'alarme comprend un appareil d'information sur les personnes.
